# EUROPÄISCHE PATENTSCHRIFT

(11) **EP 0 847 656 B1**
(45) Veröffentlichungstag und Bekanntmachung des Hinweises auf die Patenterteilung: **02.04.2003**
(21) Anmeldenummer: 96931746.0
(22) Anmeldetag: 09.08.1996
(51) Int. Cl.: H04Q 7/26, H04Q 7/24

(54) **KOMMUNIKATIONSSYSTEM MIT AN EIN KOMMUNIKATIONSNETZ ANGESCHLOSSENEN SCHNURLOS-SYSTEMEINHEITEN**
COMMUNICATIONS SYSTEM WITH CORDLESS UNITS CONNECTED INTO A COMMUNICATIONS NETWORK
SYSTEME DE TRANSMISSION AVEC DES UNITES SANS FIL RELIEES A UN RESEAU DE TRANSMISSION

(30) Priorität: 28.08.1995 DE 19531612
(43) Veröffentlichungstag der Anmeldung: 17.06.1998
(73) Patentinhaber: SIEMENS AKTIENGESELLSCHAFT, 80333 München (DE)
(72) Erfinder: SALLER, Franz, D-82061 Neuried (DE); KORPI, Markku, D-82319 Starnberg (DE); VOLLERT, Emmeran, D-83620 Grosshöhenrain (DE)
(86) Internationale Anmeldenummer: DE9601501
(87) Internationale Veröffentlichungsnummer: WO97008908

(56) Entgegenhaltungen:
- EP-A- 0 647 077
- DE-U- 9 300 044

## Beschreibung

Die Erfindung betrifft ein Kommunikationssystem nach dem Oberbegriff des Patentanspruches 1.

Ein solches Kommunikationssystem ist aus der EP-0 433 256-A2 bekannt. Bei diesem Kommunikationssystem ist ein Schnurlos-Endgerät normalerweise nur zu Verbindungen über eine bestimmte Schnurlos-Systemeinheit berechtigt. Schnurlos-Systemeinheiten dienen dazu, Schnurlos-Endgeräte mit einem Kommunikationsnetz zu verbinden. Ein solches Kommunikationsnetz kann eine private Nebenstellenanlage sein, die ihrerseits üblicherweise an ein regionales oder globales Netz angeschlossen ist. In manchen Fällen kann eine Schnurlos-Systemeinheit selbst Aufgaben einer Nebenstellenanlage erfüllen.

Aus der Entgegenhaltung DE-U-93 00 044 ist eine Anordnung zur Herstellung von Fernmeldeverbindungen in einem Kommunikationssystem bekannt, das zwei Vermittlungsanlagen mit jeweils einer Schnurlos-Systemeinheit aufweist. Jede der Schnurlos-Systemeinheiten ist mit mindestens einer Schnurlos-Basisstation verbunden. Schnurlos-Endgeräte sind durch eine endgeräteindividuelle Identifikation jeweils genau einer Schnurlos-Systemeinheit als Heimat-Schnurlos-Systemeinheit zugeordnet, wobei die jeweilige endgeräteindividuelle Identifikation in einem Speicher der Heimat-Schnurlos-Systemeinheit abgespeichert ist. Jede Schnurlos-Systemeinheit weist eine vermittlungstechnische Steuerungseinheit mit einem Steuerungsprogramm für einen vom Ort eines Schnurlos-Endgerätes unabhängigen Verbindungsaufbau auf. Das Steuerungsprogramm wertet dabei die endgeräteindividuelle Identifikation für den Verbindungsaufbau zum jeweiligen Schnurlos-Endgerät aus.

Eine Schnurlos-Systemeinheit steuert das Erkennen der Anwesenheit eines betriebsbereiten Schnurlos-Endgeräts im Sendeund Empfangsbereich einer ihrer Basisstationen und die Wegelenkung eines Verbindungsaufbaus zu diesem Endgerät über diese Basisstation (Roaming gemäß ETS 300 175-3). Hierzu enthält sie eine Prüfeinrichtung zum Überprüfen, ob ein Verbindungsaufbau von ihr zu einem Schnurlos-Endgerät möglich ist. Ein solcher Verbindungsaufbau ist möglich, wenn ein Informationsaustausch zwischen mindestens einer der Basisstationen der Schnurlos-Systemeinheit und dem Schnurlos-Endgerät über die Schnurlos-Sende/Empfangsstrecke technisch durchführbar ist. Ein Kriterium hierfür kann bei einem Informationsaustausch durch Analogsignalübertragung das Erreichen eines ausreichend großen Empfangssignalpegels und bei einem Informationsaustausch durch Digitalsignalübertragung das Erreichen einer ausreichend kleinen Bitfehlerrate sein. Ob ein Verbindungsaufbau möglich ist, hängt im Wesentlichen davon ab, ob das Schnurlos-Endgerät sich betriebsbereit im Sende- und Empfangsbereich einer Basisstation der Schnurlos-Systemeinheit befindet.

Bei bestehender Verbindung zwischen dem Schnurlos-Endgerät und einem an die Schnurlos-Systemeinheit angeschlossenen Kommunikationsnetz steuert die Schnurlos-Systemeinheit in Verbindung mit ihren Basisstationen bei einem Bereichswechsel des Schnurlos-Endgerätes von einer Basisstation zu einer benachbarten Basisstation den Verbindungsabbau über die eine und den neuen Verbindungsaufbau über die andere Basisstation (Hand Over gemäß ETS 300 175-3).

Um die Zugangsberechtigung eines Schnurlos-Endgeräts zum Kommunikationssystem zu kontrollieren und um zu kontrollieren, ob ein Schnurlos-Endgerät berechtigt ist, einen Verbindungsaufbau über die Schnurlos-Systemeinheit zu veranlassen, überprüft die Prüfeinrichtung die Zulässigkeit eines solchen Verbindungsaufbaus. Ein Schnurlos-Endgerät ist üblicherweise berechtigt, einen Verbindungsaufbau über eine Schnurlos-Systemeinheit zu veranlassen, wenn diese ihm administrativ als Heimat-Systemeinheit zugeordnet ist. Ist eine Schnurlos-Systemeinheit einem Schnurlos-Endgerät als Heimat-Systemeinheit zugeordnet, so ist dessen Identifikation in ihr gespeichert.

Basisstationen dienen vornehmlich der bidirektionalen Umsetzung von schnurlos übertragenen Signalen und drahtgebunden übertragenen Signalen. Eine schnurlose Signalübertragung kann beispielsweise per Infrarotsignal oder per Funk vorgenommen werden. Als Funk-Übertragungsverfahren kann beispielhaft das in der ETS 300 175 beschriebene DECT-Verfahren genannt werden. Eine Schnurlos-Systemeinheit kann eine oder mehrere Basisstationen haben.

Soll in einem aus der EP-0 433 256-A2 bekannten Kommunikationssystem ein Schnurlos-Endgerät im Sende- und Empfangsbereich einer Schnurlos-Systemeinheit betrieben werden, die ihm nicht als Heimat-Systemeinheit zugeordnet ist, so muß es bei der Administration dieser Systemeinheit angemeldet werden. Hierzu hält jede Schnurlos-Systemeinheit eine bestimmte Anzahl von Rufnummern bereit, die nicht an fest zugeordnete Endgeräte vergeben werden können.

In einem solchen Kommunikationssystem kann folglich ein Schnurlos-Endgerät nur im Sende- und Empfangsbereich seiner Heimat-Systemeinheit oder im Sende- und Empfangsbereich einer Schnurlos-Systemeinheit betrieben werden, bei der es administrativ vorübergehend angemeldet ist. Nur in diesen Fällen wird das Veranlassen eines Verbindungsaufbaus durch dieses Schnurlos-Endgerät von der Prüfeinrichtung einer Schnurlos-Systemeinheit als zulässig festgestellt. Die Anzahl der per Administration für eine Schnurlos-Systemeinheit zusätzlich zu den fest zugeordneten Schnurlos-Endgeräten anmeldbaren Endgeräte ist durch die Anzahl der für diese Zwecke bereitgestellten Rufnummern begrenzt. Da die einzelnen Schnurlos-Systemeinheiten für die temporäre Anmeldung von Schnurlos-Endgeräten zusätzliche freie Rufnummern bereitstellen müssen, können die installierten Ressourcen des Kommunikationssystems nicht optimal genutzt werden.

Aufgabe der Erfindung ist das Bereitstellen eines Kommunikationssystems, das einen einfachen Zugriff von Schnurlos-Endgeräten auf das Kommunikationssystem im Sende- und Empfangsbereich beliebiger Schnurlos-Systemeinheiten ermöglicht.

Diese Aufgabe löst die Erfindung durch die Merkmale des Anspruches 1. Besonders günstige Weiterbildungen der Erfindung werden in den Unteransprüchen angegeben.

Ein erfindungsgemäßes Kommunikationssystem enthält an ein Kommunikationsnetz angeschlossene Schnurlos-Systemeinheiten mit jeweils mindestens einer Schnurlos-Basisstation. Die Identifikation eines jeweiligen Schnurlos-Endgeräts ist in einer diesem als Heimat-Systemeinheit zugeordneten Schnurlos-Systemeinheit gespeichert. Durch eine den Schnurlos-Systemeinheiten jeweils zugeordnete Prüfeinrichtung ist die Möglichkeit bzw. Zulässigkeit eines Verbindungsaufbaus von der jeweiligen Schnurlos-Systemeinheit zu einem Schnurlos-Endgerät überprüfbar. Die Schnurlos-Systemeinheiten sind an ein einen verbindungslosen Dienst bereitstellendes Netz angeschlossen, um untereinander abhängig von Prüfungsergebnissen der Prüfeinrichtungen Informationen auszutauschen.

Durch das Übermitteln der Informationen zwischen den Schnurlos-Systemeinheiten über ein einen verbindungslosen Dienst bereitstellendes Netz kann ohne aufwendige Schicht-3-Signalisierung eine Punkt-zu-Mehrpunkt-Anfrage an alle zu dem Kommunikationssystem gehörenden Schnurlos-Systemeinheiten übermittelt werden.

Ergibt beispielsweise die Überprüfung durch die Prüfeinrichtung der Heimat-Systemeinheit, daß ein gerufenes Schnurlos-Endgerät sich nicht in ihrem Sende- und Empfangsbereich befindet, so kann die Heimat-Systemeinheit auf einfache Weise über das einen verbindungslosen Dienst bereitstellende Netz bei allen angeschlossenen Schnurlos-Systemeinheiten anfragen, ob ein Verbindungsaufbau zu dem Schnurlos-Endgerät von der Prüfeinrichtung irgend einer anderen Schnurlos-Systemeinheit des Kommunikationssystems möglich ist. Befindet sich das Schnurlos-Endgerät im Sende/Empfangsbereich einer Basisstation einer anderen Schnurlos-Systemeinheit, teilt diese es dem Kommunikationssystem ggf. auch über das den verbindungslosen Dienst bereitstellende Netz und die Heimat-Systemeinheit mit, und das Kommunikationssystem kann den kommenden Ruf an das gerufene Schnurlos-Endgerät verbinden. Ein solcher Verbindungsaufbau kann hierbei über die Heimat-Systemeinheit und eine zusätzliche Verbindung von der Heimat-Systemeinheit zur Schnurlos-Systemeinheit, in deren Bereich sich das Endgerät befindet, geführt werden. In den meisten Fällen - insbesondere falls die Heimat-Systemeinheit und die Schnurlos-Systemeinheit, in deren Bereich sich das Endgerät befindet, an dem selben Koppelnetz beispielsweise einer Nebenstellenanlage angeschlossen sind - ist es jedoch vorteilhaft, den kommenden Ruf unmittelbar über die Schnurlos-Systemeinheit zu verbinden, in deren Bereich sich das Endgerät befindet. Die anfallenden Gesprächsdaten können dann zwischen dieser Systemeinheit und der Heimat-Systemeinheit über das den verbindungslosen Dienst bereitstellende Netz übermittelt werden.

Wünscht beispielsweise ein Schnurlos-Endgerät, das sich im Sende/Empfangsbereich einer Basisstation einer Schnurlos-Systemeinheit befindet, die ihm nicht als Heimat-Systemeinheit zugeordnet ist, Zugang zum Kommunikationssystem, um einen Verbindungsaufbau zu veranlassen, so ergibt die Zulässigkeitsprüfung durch die Prüfeinrichtung dieser Schnurlos-Systemeinheit, daß die Identifikation dieses Schnurlos-Endgeräts bei ihr nicht gespeichert ist. In diesem Fall kann die Schnurlos-Systemeinheit auf einfache Weise über das einen verbindungslosen Dienst bereitstellende Netz bei allen angeschlossenen Schnurlos-Systemeinheiten anfragen, ob das Schnurlos-Endgerät zum Kommunikationssystem zugangsberechtigt ist, ob also in irgendeiner Schnurlos-Systemeinheiten des Kommunikationssystems seine Identifikation gespeichert ist. Ist eine Schnurlos-Systemeinheit des Kommunikationssystems Heimat-Systemeinheit des Schnurlos-Endgeräts, kann diese eine entsprechende Information über das einen verbindungslosen Dienst bereitstellende Netz zur anfragenden Schnurlos-Systemeinheit übermitteln. Diese kann daraufhin einen Zugriff des Schnurlos-Endgeräts auf das Kommunikationssystem ermöglichen. Die anfallenden Gesprächsdaten·können dann zwischen dieser Systemeinheit und der Heimat-Systemeinheit über das den verbindungslosen Dienst bereitstellende Netz übermittelt werden.

Verbindungsloser Dienst bedeutet hier verbindungslos bezüglich der Schicht 2 und eventuell der Schicht 3 gemäß dem OSI-Referenzmodell (ISO 7498 von 1993).

Als einen verbindungslosen Dienst bereitstellendes Netz kann beispielsweise ein mit LAN (vom englischsprachigen local area network) bezeichnetes, Datagramm-orientiertes lokales Netz vorgesehen sein. Als Beispiel für ein Datagramm-orientiertes lokales Netz kann das in den Normschriften IEEE 802.3 und IEEE 802.5 festgelegte Ethernet genannt werden.

Sind die einzelnen Schnurlos-Systemeinheiten des Kommunikationssystems in einem regionalen oder globalen Firmennetz in großem Abstand zueinander angeordnet, kann das einen verbindunglosen Dienst bereitstellende Netz aus zwei oder mehreren lokalen Netzen bestehen, die über Standverbindungen oder über ein regionales oder globales Netz einen Netzverbund bilden. Solche, einen verbindungslosen Dienst bereitstellenden Netze sind z.B. in dem Buch "SMDS Wide-Area Data Networking with Switched Multi-megabit Data Service" von R.W. Klessig und K. Tesink, Prentice Hall, 1995, insbesondere auf den Seiten 11 bis 14 beschrieben.

Vorzugsweise enthält das gesamte einen verbindungslosen Dienst bereitstellenden Netz eine einzige Steuerung zum Kontrollieren der Zugriffsberechtigung angeschlossener Schnurlos-Systemeinheiten auf dieses Netz und zum Abwehren unberechtigter Zugriffsversuche. Diese Steuerung kann beispielsweise durch einen zentralen Computer realisiert sein, der das Ankoppeln von fernen Schnurlos-Systemeinheiten oder von fernen lokalen Netzen des einen verbindungslosen Dienst bereitstellenden Netzes an ein zentrales lokales Netz überwacht und somit einen unberechtigten Datenaustausch abwehren kann.

In Datagramm-orientierten Netzen ist das Empfangen und Senden von Informationen durch einen hierzu nicht Berechtigten, der zum Netz zugangsberechtigt ist, sehr einfach möglich. Aus Sicherheitsgründen, insbesondere um einen unberechtigten Zugriff auf das Kommunikationssystem zu vermeiden, ist es daher empfehlenswert, ein gesondertes Datagramm-orientiertes Netz vorzusehen, das ausschließlich dem Informationsaustausch zwischen Schnurlos-Systemeinheiten dient. Besteht ein solches gesondertes Datagramm-orientiertes Netz aus mehreren, in größerem Abstand zueinander angeordneten lokalen Netzen, so werden an ein zentrales lokales Netz ferne lokale Netze oder auch einzelne, ferne Schnurlos-Systemeinheiten vorzugsweise über eine dauerhaft aufgebaute Punkt-zu-Punkt-Verbindung wie z.B. eine Standleitung angekoppelt, um einen unberechtigten Zugriff über ein Datagramm-orientiertes Weitverkehrsnetz zu vermeiden.

Um einzelne, ferne Schnurlos-Systemeinheiten an das Kommunikationssystem anzuschließen, kann auch die in der physikalischen Schicht des einen verbindungslosen Dienst bereitstellenden Netzes erforderliche Verbindung zwischen dem gesonderten Datagramm-orientierten Netz und diesen fernen Schnurlos-Systemeinheiten bedarfsweise als Wählverbindung realisiert werden. In diesem Fall müssen die Steuerungen der Schnurlos-Systemeinheiten und/oder die zentrale Steuerung des Datagramm-orientierten Netzes den erforderlichen Verbindungsaufbau veranlassen.

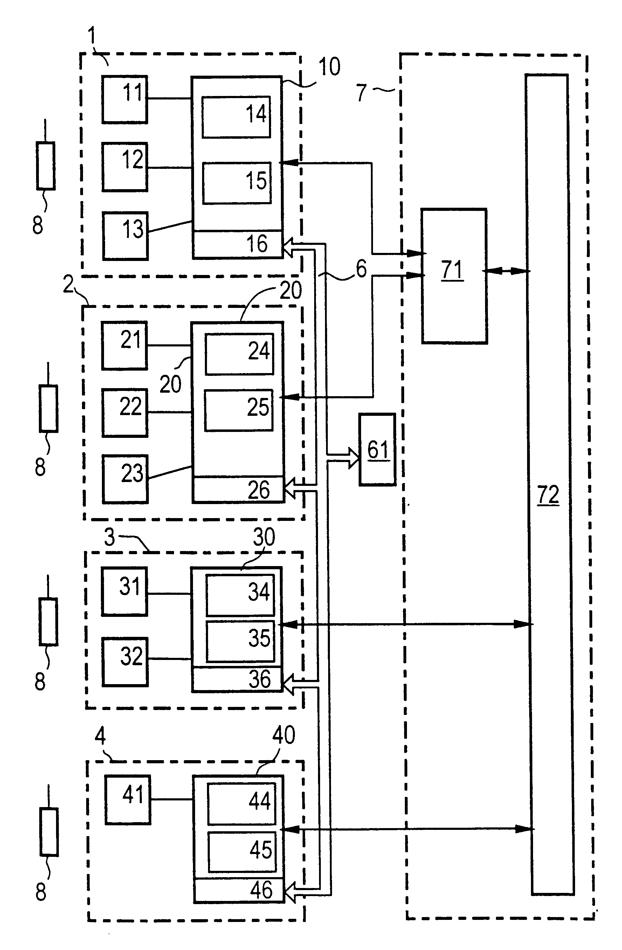

Nachstehend wird die Erfindung an Hand der Figur näher erläutert:

Die Figur zeigt als Ausführungsbeispiel der Erfindung ein Kommunikationssystem mit an ein Kommunikationsnetz 7 angeschlossenen Schnurlos-Systemeinheiten 1, 2, 3 und 4. Jede der Schnurlos-Systemeinheiten 1, 2, 3 und 4 hat eine Steuerung 10, 20, 30 und 40 sowie Basisstationen 11, 12, 13, 21, 22, 23, 31, 32 und 41. Im gezeigten Ausführungsbeispiel haben die Schnurlos-Systemeinheiten 1 und 2 jeweils drei Basisstationen 11, 12, 13 und 21, 22, 23, die Schnurlos-Systemeinheit 3 hat zwei Basisstationen 31 und 32 und die Schnurlos-Systemeinheit 4 hat eine Basisstation 41. Die Steuerung 10, 20, 30, 40 jeder Schnurlos-Systemeinheit 1, 2, 3, 4 enthält eine Prüfeinrichtung 15, 25, 35, 45 sowie eine Speichereinrichtung 14, 24, 34, 44, in die jeweils die Identifikation der Schnurlos-Endgeräte 8 einprogrammiert ist, denen die Schnurlos-Systemeinheit 1, 2, 3, 4 als Heimat-Systemeinheit zugeordnet ist. Im Ausführungsbeispiel ist ein einziges Schnurlos-Endgerät 8 dargestellt.

Die in der Figur gezeigten Schnurlos-Systemeinheiten 1, 2, 3 und 4 sind jeweils über eine Schnittstellenanordnung 16, 26, 36, 46 an ein einen verbindungslosen Dienst bereitstellendes Netz 6 angeschlossen. Dieses einen verbindungslosen Dienst bereitstellende Netz 6 wird in dem Ausführungsbeispiel der Figur von einer zentralen Steuereinrichtung 61, beispielsweise einem Mikrocomputer, gesteuert.

In dem dargestellten Ausführungsbeispiel sind die Schnurlos-Systemeinheiten 1 und 2 jeweils an das Koppelnetzwerk 71 einer privaten Nebenstellenanlage angeschlossen, und dieses Koppelnetzwerk 71 ist an ein globales Kommunikationsnetz 72 angeschlossen. Die Schnurlos-Systemeinheiten 3 und 4 sind jeweils unmittelbar an das globale Kommunikationsnetz 72 angeschlossen.

Nachstehend wird die Funktionsweise eines Kommunikationssystems gemäß dem Ausführungsbeispiel der Figur unter der Vorgabe beschrieben, daß dem Schnurlos-Endgerät 8 die Schnurlos-Systemeinheit 1 als Heimat-Systemeinheit zugeordnet ist und daß das Schnurlos-Endgerät 8 sich im Sende- und Empfangsbereich einer der Basisstationen 31 und 32 der Schnurlos-Systemeinheit 3 befindet und betriebsbereit ist.

Wird in dem beschriebenen Fall·versucht, vom Schnurlos-Endgerät 8 ausgehend einen Verbindungsaufbau über die Schnurlos-Systemeinheit 3 zum Kommunikationsnetz 7 zu veranlassen, so überprüft die Prüfeinrichtung 35 an Hand der Speichereintragungen im Speicher 34, ob sie Heimat-Systemeinheit des Schnurlos-Endgeräts 8 ist. Da dies nicht der Fall ist, wird über die Schnittstellenanordnung 36 und das einen verbindungslosen Dienst bereitstellende Netz 6 eine Anfrage an die übrigen Systemeinheiten 1, 2 und 4 des Kommunikationssystems übermittelt, ob der vom Schnurlos-Endgerät 8 gewünschte Verbindungsaufbau zulässig ist. Diese über die Schnittstellenanordnung 16 zur Steuerung 10 der Schnurlos-Systemeinheit 1 gelangende Anfrage führt zu einer Überprüfung durch die Prüfeinrichtung 15 dieser Systemeinheit 1. In der Systemeinheit 1 wird der Zugriffsversuch durch das Schnurlos-Endgerät 8 als zulässig festgestellt. Die Steuerung 10 der Schnurlos-Systemeinheit 1 übermittelt daraufhin über die Schnittstellenanordnung 16, das einen verbindungslosen Dienst bereitstellende Netz 6 und die Schnittstellenanordnung 36 die Information an die Schnurlos-Systemeinheit 3, daß der Zugriffsversuch zulässig ist und übermittelt außerdem - falls erforderlich - weitere, für einen Verbindungsaufbau erforderliche Informationen. Daraufhin behandelt die Systemeinheit 3 das Schnurlos-Endgerät 8 so, als wäre sie diesem als Heimat-Systemeinheit zugeordnet.

Die Steuereinheit 61 überwacht alle genannten Zugriffe auf das einen verbindungslosen Dienst bereitstellende Netz 6 auf ihre Zulässigkeit.

Kommt in dem oben erwähnten Fall über das globale Netz 72 und das Koppelnetz 71 der privaten Nebenstellenanlage die Anfrage für einen Verbindungsaufbau zu dem Schnurlos-Endgerät 8 an die Schnurlos-Systemeinheit 1, so überprüft die Prüfeinrichtung 15 der Schnurlos-Systemeinheit 1, ob ein Verbindungsaufbau zu dem Schnurlos-Endgerät 8 möglich ist. Im beschriebenen Fall ist ein solcher Verbindungsaufbau über die Schnurlos-Systemeinheit 1 nicht möglich. Daraufhin übermittelt die Steuerung 10 der Schnurlos-Systemeinheit 1 über die Schnittstellenanordnung 16 und das einen verbindungslosen Dienst bereitstellende Netz 6 eine Anfrage an die Schnurlos-Systemeinheiten 2, 3 und 4, ob über diese Schnurlos-Systemeinheiten 2, 3 oder 4 ein Verbindungsaufbau zum Schnurlos-Endgerät 8 möglich ist. Diese Anfrage gelangt über die Schnittstellenanordnung 36 zur Steuerung 30 der Schnurlos-Systemeinheit 3, woraufhin deren Prüfeinrichtung 35 überprüft, ob der nachgefragte Verbindungsaufbau möglich ist. Das positive Prüfergebnis wird über die Schnittstellenanordnung 36, das Netz 6 und die Schnittstellenanordnung 16 zur Steuerung 10 der Schnurlos-Systemeinheit 1 übermittelt. Daraufhin veranlaßt die Steuerung 10 der Schnurlos-Systemeinheit 1 einen Verbindungsaufbau über die Schnurlos-Systemeinheit 3 zum Schnurlos-Endgerät 8.

## Patentansprüche

1. Kommunikationssystem mit an ein Kommunikationsnetz (7) angeschlossenen Schnurlos-Systemeinheiten (1, 2, 3, 4) jeweils mit mindestens einer Schnurlos-Basisstation (11 - 13, 21 - 23, 31, 32, 41), wobei die Identifikation eines jeweiligen Schnurlos-Endgeräts (8) in einer diesem als Heimat-Systemeinheit zugeordneten Schnurlos-Systemeinheit (1, 2, 3, 4) gespeichert ist und wobei durch eine den Schnurlos-Systemeinheiten (1, 2, 3, 4) jeweils zugeordnete Prüfeinrichtung (15, 25, 35, 45) die Möglichkeit bzw. Zulässigkeit eines Verbindungsaufbaus von der jeweiligen Schnurlos-Systemeinheit (1, 2, 3, 4) zu einem Schnurlos-Endgerät (8) überprüfbar ist, **dadurch gekennzeichnet, daß** die Schnurlos-Systemeinheiten (1, 2, 3, 4) an ein einen verbindungslosen Dienst bereitstellendes Netz (6, 61) angeschlossen sind, um untereinander abhängig von Prüfungsergebnissen der Prüfeinrichtungen (15, 25, 35, 45) Informationen auszutauschen.

2. Kommunikationssystem nach Anspruch 1, **dadurch gekennzeichnet, daß** als einen verbindungslosen Dienst bereitstellendes Netz (6, 61) ein Datagramm-orientiertes Netz (6, 61) vorgesehen ist.

3. Kommunikationssystem nach Anspruch 2, **dadurch gekennzeichnet, daß** das Datagramm-orientierte Netz (6, 61) ausschließlich zum Informationsaustausch zwischen Schnurlos-Systemeinheiten (1, 2, 3, 4) vorgesehen ist.

4. Kommunikationssystem nach Anspruch 2 oder 3, **dadurch gekennzeichnet, daß** das Datagramm-orientierte Netz (6, 61) ein lokales Netz (6, 61) ist.

5. Kommunikationssystem nach Anspruch 2 oder 3, **dadurch gekennzeichnet, daß** das Datagramm-orientierte Netz (6, 61) aus mindestens zwei gekoppelten lokalen Netzen besteht.

6. Kommunikationssystem nach Anspruch 2, 3, 4 oder 5, **dadurch gekennzeichnet, daß** das Datagramm-orientierte Netz (6, 61) eine einzige Steuerung (61) zum Kontrollieren der Zugriffsberechtigung angeschlossener Schnurlos-Systemeinheiten (1, 2, 3, 4) auf dieses Netz (6) und zum Abwehren unberechtigter Zugriffsversuche hat.

7. Kommunikationssystem nach Anspruch 6, **dadurch gekennzeichnet, daß** das Datagramm-orientierte Netz (6, 61) ein zentrales lokales Netz enthält, an das ferne Schnurlos-Systemeinheiten (3, 4) und/oder ferne lokale Netze des Datagramm-orientierten Netzes (6, 61) jeweils über eine dauerhafte Punkt-zu-Punkt-Verbindung angekoppelt sind.

## Claims

1. Communication system comprising cordless system units (1, 2, 3, 4) connected to a communications network (7), with in each case at least one cordless base station, wherein the identification of a respective cordless terminal (8) is stored in a cordless system unit (1, 2, 3, 4) allocated to it as home system unit and wherein the possibility or permissibility of setting up a connection from the respective cordless system unit (1, 2, 3, 4) to a cordless terminal (8) can be checked by a test device (15, 25, 35, 45) in each case allocated to the cordless system units (1, 2, 3, 4), **characterized in that** the cordless system units (1, 2, 3, 4) are connected to a network (6, 61) providing a connection-less service in order to exchange information between themselves in dependence on test results of the test devices (15, 25, 35, 45).

2. Communication system according to Claim 1, **characterized in that** a datagram-oriented network (6, 61) is provided as a network (6, 61) providing a connection-less service.

3. Communication system according to Claim 2, **characterized in that** the datagram-oriented network (6, 61) is exclusively provided for the exchange of information between cordless system units (1, 2, 3, 4).

4. Communication system according to Claim 2 or 3, **characterized in that** the datagram-oriented network (6, 61) is a local area network (6, 61).

5. Communication system according to Claim 2 or 3, **characterized in that** the datagram-oriented network (6, 61) consists of at least two coupled local area networks.

6. Communication system according to Claim 2, 3, 4 or 5, **characterized in that** the datagram-oriented network (6, 61) has a single controller (61) for checking the authorization of connected cordless system units (1, 2, 3, 4) to access this network (6) and for counteracting unauthorized access attempts.

7. Communication system according to Claim 6, **characterized in that** the datagram-oriented network (6, 61) contains a central local area network to which remote cordless system units (3, 4) and/or remote local area networks of the datagram-oriented network (6, 61) are in each case coupled via a permanent point-to-point connection.

## Revendications

1. Système de communication comprenant des unités sans fil (1, 2, 3, 4) reliées à un réseau de communication (7) et comprenant chacune au moins une station de base sans fil (11 - 13, 21 - 23, 31, 32, 41), l'identification de chaque terminal sans fil (8) étant mise en mémoire dans une unité sans fil (1, 2, 3, 4) qui lui est assignée en tant qu'unité de rattachement et un dispositif de contrôle (15, 25, 35, 45) assigné à chaque unité sans fil (1, 2, 3, 4) permettant de contrôler la possibilité resp. l'autorisation de l'établissement d'une liaison entre chaque unité sans fil (1, 2, 3, 4) et un terminal sans fil (8), **caractérisé en ce que** les unités sans fil (1, 2, 3, 4) sont reliées à un réseau (6, 61) mettant à disposition un service sans connexion pour échanger entre elles des informations en dépendance de résultats de contrôles des dispositifs de contrôle (15, 25, 35, 45).

2. Système de communication selon la revendication 1, **caractérisé en ce qu'**est prévu comme réseau (6, 61) mettant à disposition un service sans connexion un réseau (6, 61) orienté datagramme.

3. Système de communication selon la revendication 2, **caractérisé en ce que** le réseau (6, 61) orienté datagramme est exclusivement prévu pour l'échange d'informations entre les unités sans fil (1, 2, 3, 4).

4. Système de communication selon la revendication 2 ou 3, **caractérisé en ce que** le réseau (6, 61) orienté datagramme est un réseau local (6, 61).

5. Système de communication selon la revendication 2 ou 3, **caractérisé en ce que** le réseau (6, 61) orienté datagramme se compose d'au moins deux réseaux locaux connectés.

6. Système de communication selon la revendication 2, 3, 4 ou 5, **caractérisé en ce que** le réseau (6, 61) orienté datagramme a une seule commande (61) pour le contrôle de l'autorisation d'accès à ce réseau (6) d'unités sans fil reliées (1, 2, 3, 4) et pour empêcher les tentatives d'accès non autorisé.

7. Système de communication selon la revendication 6, **caractérisé en ce que** le réseau (6, 61) orienté datagramme contient un réseau local central auquel sont connectés, chacun par l'intermédiaire d'une connexion permanente de point à point, des unités sans fil (3, 4) et/ou des réseaux locaux éloignés dudit réseau (6, 61) orienté datagramme.
